# EUROPEAN PATENT SPECIFICATION

(11) **EP 3 095 564 B1**
(45) Date of publication and mention of the grant of the patent: **04.07.2018**
(21) Application number: 15382263.0
(22) Date of filing: 20.05.2015
(51) Int. Cl.: B25J 9/06, B25J 9/10

(54) **ROBOT FOR INSPECTION OF CONFINED SPACES**
ROBOTER ZUR INSPEKTION VON BEENGTEN RÄUMEN
ROBOT D'INSPECTION POUR ESPACES CONFINÉS

(43) Date of publication of application: 23.11.2016
(73) Proprietor: Airbus Defence and Space, S.A., 28906 Getafe (Madrid) (ES)
(72) Inventor: ESTEBAN FINCK, Fernando Enrique, 28906 Getafe (ES); LEÓN ARÉVALO, Francisco José, 28906 Getafe (ES); GIRÓN CRUZ, Antonio, 28906 Getafe (ES); SÁNCHEZ RIVAS, Francisco Javier, 28906 Getafe (ES); GIRELA BAENA, Lucas, 28906 Getafe (ES)
(74) Representative: Elzaburu S.L.P.

(56) References cited:
- US-A- 5 765 443
- US-A1- 2011 054 687
- US-B2- 7 171 279

## Description

### FIELD OF THE INVENTION

The present invention relates to a robot for inspecting confined spaces in, particularly, aeronautical structures.

### BACKGROUND

In the aeronautic industry is very common the occurrence of dry leaks in tanks and pipes that are sometimes difficult to detect because they occur in narrow confined spaces where is not easy to implement detection techniques based on helium, bubbles or a specific trace gaz.

Another problem is the difficulty of detecting obstructions inside pipes.

To solve such problems in, particularly, pipes the use of snake-type robots provided with an end-effector having suitable inspection means such as that described, for example, in US 7,171,279 has been proposed. US 2011/0054687 A1 discloses a robot for inspecting confined spaces comprising a robotic arm for carrying an end effector provided with inspection means and a control system, the robotic arm comprising a first module formed by several links connected by first articulations, said first links being driven by means of tendons attached to them by one end and to actuating devices located at a fixed base by the other end, the maximum opening angle in the articulations being +/-30°, and the robotic arm also comprising a second module arranged next to the first module that comprises several second links connected by second articulations which are driven by second actuating devices. However, these robots do not meet all the conditions required for accessing to the interior of aeronautical structures where the end-effector must move in narrow spaces of difficult access and having obstacles to be overcome.

The present invention is directed to solving that problem.

### SUMMARY OF THE INVENTION

The invention provides a robot according to claim 1 for inspecting confined space comprising a robotic arm, an end-effector provided with inspection means and a control system. The robotic arm is formed by a fixed base and first and second modules respectively formed by first and second links connected by first and second articulations that are configured such that the maximum opening angles α γ β of their first and second articulations are, respectively, ±30° and ±55°. The first links are driven by means of tendons attached to them by one of their ends and to first actuating devices located at said fixed base by the other end. The second links are driven by second actuating devices located on the second links. The different configuration of the first and second module of the robot arm allows access to confined spaces in environments with obstacles.

In one embodiment the end-effector is formed by a third link, attached to the last second link by a second articulation and by a final link, carrying inspection means (in particular a vision camera and an IR camera) connected to the third link by a pitch axis. Thus the inspection means can be placed in the desired location making pitch and roll movements relative to the last second link.

In one embodiment, the first links of the first module are driven by three tendons and the first articulations are Cardan joints.

In one embodiment, the second articulations of the second links of the second module are Cardan joints whose cross shaft comprises two toothed wheels associated with its two axes and the second actuating devices comprise a motor-reduction gear assembly having a cooperating final pinion with said toothed wheels.

Other desirable features and advantages of this invention will become apparent from the subsequent detailed description of the invention and the appended claims, in relation with the enclosed drawings.

### BRIEF DESCRIPTION OF THE DRAWINGS

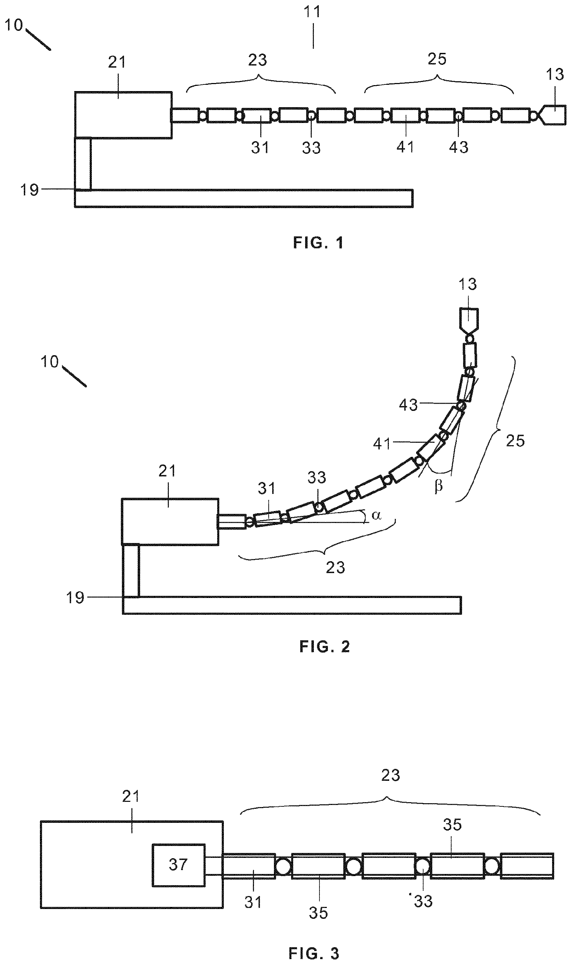

Figure 1 is a schematic cross sectional view illustrating a robot according to the invention formed by a first and a second module, with five links each, in its resting state.
Figure 2 is a schematic view of the robot of Figure 1 in an operating state illustrating the different mobility of the links of its two modules.
Figure 3 is a schematic view of the drive means of the first links of the first module.

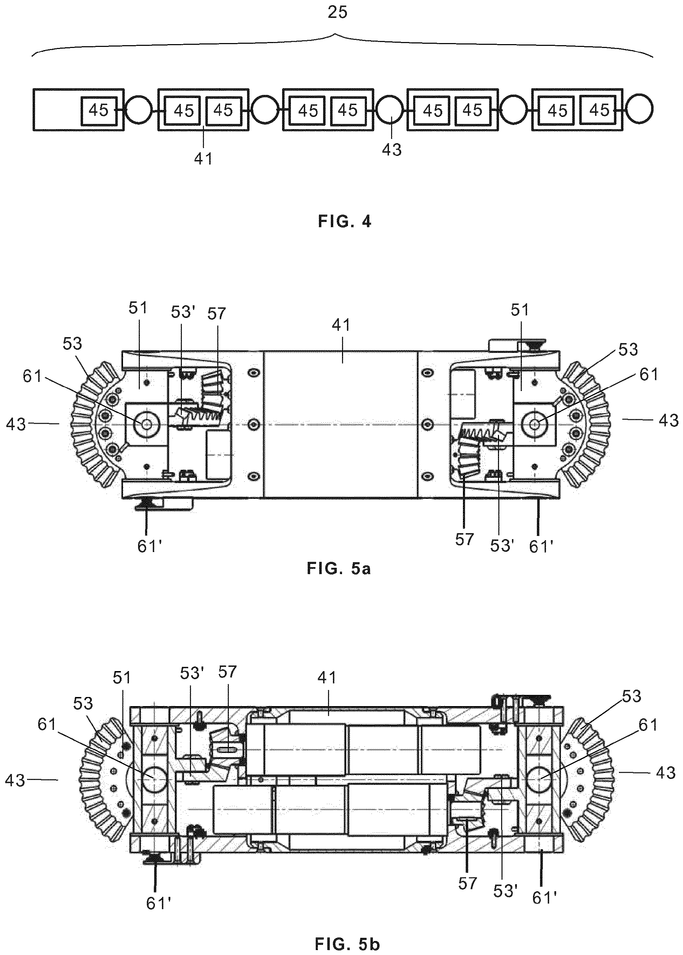

Figure 4 is a schematic view of the drive means of the second links of the second module.
Figures 5a and 5b are top and bottom views of a second link showing the configuration of its two articulations and the engagement between an articulation of a second link and the final pinion of a motor disposed inside the second link.

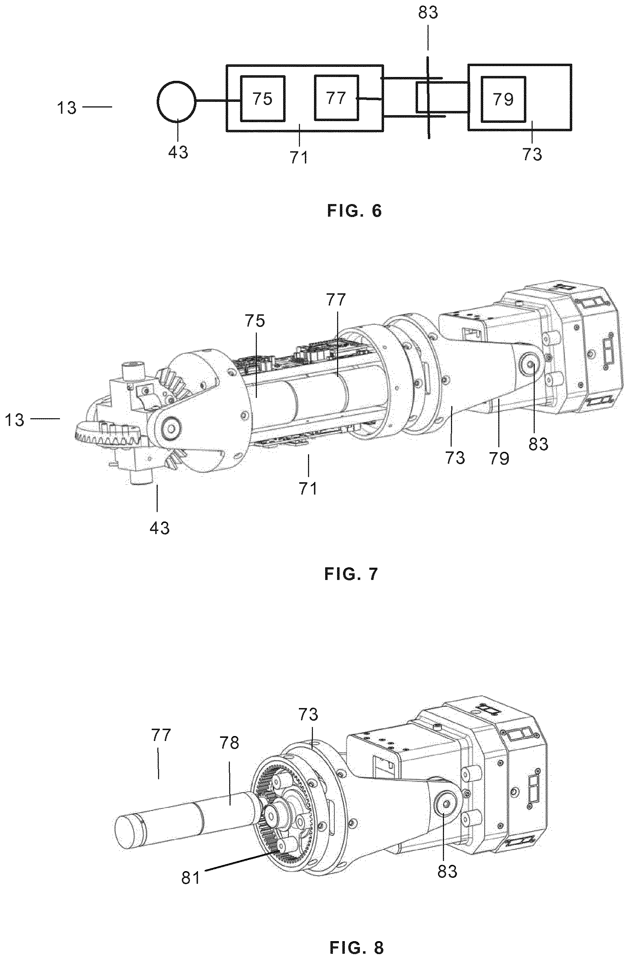

Figure 6 is a schematic view of the structure and drive means of the end-effector.
Figure 7 is a perspective view of the end-effector.
Figure 8 is a perspective view of the means allowing the pitching movement of the end-effector.

### DETAILED DESCRIPTION OF THE INVENTION

A description of a robot 10 according to the invention intended, particularly, to the inspection of aircraft confined spaces such as a fuel tank follows.

The robot 10 comprises:
- A robotic arm 11 and an end-effector 13, the first being configured to position the second within a confined space in precise locations to inspect it, the second having the means needed to carry out inspection tasks such as a vision camera and an IR camera.
- A control, power and interface system formed by all the means necessary for controlling and supplying power to the components of the robotic arm 11 and the end-effector 13.
- A user interface allowing an operator to interact with the robot 10 and control it.
- A support structure 19 that can also have displacement means.

The robotic arm 11 is formed by a fixed base 21, a first module 23 (that will be also called tendons module) and a second module 25 (that will be also called motorized module).

The tendons module 23 is formed, in a manner known in the art, by first links 31, connected by first articulations 33 configured particularly as Cardan joints, which are driven by tendons 35 (for example, by three tendons for each first link 31 if they must have 3 degrees of freedom) that are attached at its other end to first actuating devices 37 (one for each tendon 35) located on the fixed base 21.

The motorized module 25 is formed by second links 41, connected by second articulations 43, which are driven by second actuating devices 45 located on the second links 41.

The robotic arm 11 therefore comprises first and second links 31, 41 capable of performing three-dimensional movements, allowing placing the end-effector 13 anywhere in the work space thanks to the different configurations that said first and second links 31, 41 can achieve.

The two mentioned modules differ both in the mobility technique implemented by them and in the load and angles capacities that they can achieve. The tendons module 23 is configured to support a given weight threshold (for example 20 kg) and to have a maximum opening angle of ±30° in their first articulations 33. The motorized module 25 is configured to support less weight but to have a maximum opening angle of ±55° on their second articulations 43. On the other hand, the end-effector 13, located after the motorized module 25, contains the necessary sensors for the inspection tasks.

The fixed base 21 is the bulkiest part of the robot. Its function is to provide physical support to the robotic arm 11 and host the first actuating devices 37 of the first links 31 of the tendons module 23 which occupy a considerable space that makes impossible to integrate them within it.

Such first actuating devices 37 are, preferably, ball screws driven by motors to pull the tendons 35 acting on the first links 31 and brakes to maintain the first links 31 on a certain position and to prevent unwanted movements due to the weight of the system. They also comprise means associated to the control system of the robot such as, particularly, an encoder for each motor to measure the number of rotations thereof during displacement of the nut along the spindle and to know therefore the movement produced in the first articulations 33 of the tendons module 23 and a limit switch per spindle to delimit the displacement of the tendons 35 within the limits fixed for each first articulations 33. There are no sensors therefore in the first articulations 33 to verify the accuracy of the axis rotations due to both the precision of the encoders associated to the motors and the low elongation of the tendons 35 if wires with an appropriate strength are chosen.

In the case of the second links 41, the second actuating devices 45 that generate their movements are located inside them. This characteristic, together with the design of the second articulations 43, allows the robotic arm 11 to achieve more complex and inclined positions during its movement.

The second articulations 43 are Cardan joints whose cross shaft 51 includes two toothed wheels 53, 53' associated to their shafts 61, 61'. The second actuating devices 45 comprise a motor-reduction gear assembly with and geared motor assembly with a final pinion 57 in the output axis which meshes toothed wheel 53' of the cross shaft 51.

To measure the rotation angle produced on the shafts 61, 61' of a second articulation 43 one absolute rotary encoder of magnetic type mounted in the own articulation for each one of axes 61, 61' is used. It is mainly formed by two components: a Hall-effect sensor integrated in the circuit and a field magnet. Its operating principle is based on the magnetic activity detected in the sensor due to the variation of its orientation relative to the magnet.

The second actuating devices 45 also comprise a brake to ensure immobilization of the robotic arm 11 in a given configuration.

The end-effector 13 is formed by a third link 71 connected to the last second link 41 of the motorized module 25 by a second articulation 43 and a final link 73, attached to the third link 71 by a pitch axis 83, which houses the components necessary for the inspection function.

The final link 73 may comprise a quick connect/disconnect connector, which collect in their pins the electrical signals of all the inspection devices so that it can operate without being connected directly to the robotic arm 11. Thus, an operator can use the inspection devices located in the end-effector 13, regardless of the robot 10. Navigation sensors, inspection sensors and various points of artificial light are included among the components of the final link 73 of the inspection end-effector 13.

As navigation sensors the final link 73 comprises an encoder at the exit of its rotation axis for correction and feedback of the motion made and a distance sensor to know the minimum safe distance to allow the robotic system to move without risk of collision with obstacles and boundaries of the environment. In the case of the aeronautical structures to which the robot is intended it can be assumed that said safe distance is in the 10-14cm range.

As inspection sensors the final link 73 comprises a vision camera and an IRT ("InfraRed Thermography") camera. The view camera should preferably meet the following functional requirements: autofocus, digital zoom, high resolution, adaptation to changes in lighting, compact size and light weight. The IRT camera allows a thermographic inspection which is considered the most appropriate for obstructions inside ducts of aeronautical structures.

The third link 71 comprises on one side an actuating device 75, similar to the second actuating devices 45 of the second module 25, cooperating with a toothed wheel 53 of the last second articulation 43. On the other side comprises a third actuating device 77 such as a motor with an output pinion 78 cooperating with a ring gear 81 to produce a rolling movement to the end-effector 13.

The final link 73 comprises a fourth actuating device 79 which is arranged to transmit it a pitching movement rotating it over the pitch axis 83 through a suitable transmission system.

Although the present invention has been described in connection with various embodiments, it will be appreciated from the specification that various combinations of elements, variations or improvements therein may be made, and are within the scope of the invention as defined by the appended claims.

## Claims

1. Robot for inspecting confined spaces comprising a robotic arm (11), an end-effector (13) provided with inspection means and a control system; the robotic arm (11) comprising a fixed base (21) and a first module (23) adjacent to the fixed base (21) formed by several first links (31) connected by first articulations (33); said first links (31) being driven by means of tendons (35) attached to them by one end and to first actuating devices (37) located at said fixed base (21) by the other end; wherein:
- the first module (23) is configured so that the maximum opening angle α in the first articulations (33) is ±30°; and wherein the robotic arm
- also comprises a second module (25) arranged next to the first module (23) that comprises several second links (41), connected by second articulations (43), which are driven by second actuating devices (45) located in the second links (41); the second module (25) being configured so that the maximum opening angle β in the second articulations (43) is ±55°.

2. Robot according to claim 1, wherein the end-effector (13) is arranged next to the second module (25) so that the inspection means can perform pitching and rolling movements relative to the last second link (41).

3. Robot according to claim 2, wherein the end-effector (13) is formed by a third link (71), attached to the last second link (41) by a second articulation (43), and a final link (73), carrying the inspection means, connected to the third link (71) by a pitch axis (83).

4. Robot according to claim 3, wherein the third link (71) comprises a third actuating device (77) cooperating with a ring gear (81) disposed adjacent to the final link (73) to perform the rolling movements of the end-effector (13).

5. Robot according to claim 3, wherein the final link (73) comprises a fourth actuating device (79) cooperating with the pitch axis (83) to perform the pitching movements of the final link (73).

6. Robot according to any of claims 1-5, wherein the inspection means arranged in the end-effector (13) comprise at least one vision camera and one IRT camera.

7. Robot according to any of claims 1-6, wherein each first link (31) is driven by three tendons (35) and said first articulations (33) are Cardan joints.

8. Robot according to any of claims 1-7, wherein the second articulations (43) are Cardan joints whose cross shaft (51) comprises two toothed wheels (53, 53') associated with their shafts (61, 61') and the second actuating devices (45) comprise a motor-reduction gear assembly with a final pinion (57) cooperating with said toothed wheels (53, 53').

9. Robot according to claim 8, wherein said second actuating devices (45) also comprise a brake.

## Patentansprüche

1. Roboter zur Inspektion von beengten Räumen, umfassend einen Roboterarm (11), einen Endeffektor (13), der mit Inspektionsmitteln und einem Steuersystem bereitgestellt wird; wobei der Roboterarm (11), der eine feststehende Basis (21) und ein erstes Modul (23) umfasst, das an die feststehende Basis (21) angrenzt, durch mehrere erste Glieder (31) gebildet ist, die durch erste Gelenke (33) verbunden sind; wobei die ersten Glieder (31) mittels Spanngliedern (35) angetrieben werden, die mit einem Ende an ihnen und mit dem anderen Ende an ersten Betätigungsvorrichtungen (37) befestigt sind, die sich an der feststehenden Basis (21) befinden;
wobei:
- das erste Modul (23) so ausgelegt ist, dass der Maximalöffnungswinkel α in den ersten Gelenken (33) ±30° beträgt;
und wobei der Roboterarm
- außerdem ein zweites Modul (25) umfasst, das neben dem ersten Modul (23) angeordnet ist, das mehrere zweite Glieder (41) umfasst, die durch zweite Gelenke (43) verbunden sind, die durch zweite Betätigungsvorrichtungen (45) betrieben werden, die sich in den zweiten Gliedern (41) befinden; wobei das zweite Modul (25) so ausgelegt ist, dass der Maximalöffnungswinkel β in den zweiten Gelenken (43) ±55° beträgt.

2. Roboter nach Anspruch 1, wobei der Endeffektor (13) neben dem zweiten Modul (25) angeordnet ist, so dass die Inspektionsmittel Neigungs- und Rollbewegungen relativ zum letzten zweiten Glied (41) durchführen können.

3. Roboter nach Anspruch 2, wobei der Endeffektor (13) durch ein drittes Glied (71), das am letzten zweiten Glied (41) durch ein zweites Gelenk (43) befestigt ist, und ein Endglied (73) gebildet ist, das die Inspektionsmittel trägt, die mit dem dritten Glied (71) durch eine Neigungsachse (83) verbunden sind.

4. Roboter nach Anspruch 3, wobei das dritte Glied (71) eine dritte Betätigungsvorrichtung (77) umfasst, die mit einem Zahnkranz (81) zusammenarbeitet, der angrenzend an das Endglied (73) angeordnet ist, um die Rollbewegungen des Endeffektors (13) durchzuführen.

5. Roboter nach Anspruch 3, wobei das Endglied (73) eine vierte Betätigungsvorrichtung (79) umfasst, die mit der Neigungsachse (83) zusammenarbeitet, um die Neigungsbewegungen des Endglieds (73) durchzuführen.

6. Roboter nach einem der Ansprüche 1-5, wobei die Inspektionsmittel, die in dem Endeffektor (13) angeordnet sind, mindestens eine Bildkamera und eine IRT-Kamera umfassen.

7. Roboter nach einem der Ansprüche 1-6, wobei jedes erste Glied (31) durch drei Spannglieder (35) angetrieben wird und die ersten Gelenke (33) Kreuzgelenke sind.

8. Roboter nach einem der Ansprüche 1-7, wobei die zweiten Gelenke (43) Kreuzgelenke sind, deren Kreuzwelle (51) zwei Zahnräder (53, 53') umfasst, die ihren Wellen (61, 61') zugeordnet sind, und wobei die zweiten Betätigungsvorrichtungen (45) eine Motorverringerungsgetriebebaugruppe mit einem abschließenden Ritzel (57), das mit den Zahnrädern (53, 53') zusammenarbeitet, umfassen.

9. Roboter nach Anspruch 8, wobei die zweiten Betätigungsvorrichtungen (45) ebenfalls eine Bremse umfassen.

## Revendications

1. Robot pour inspecter des espaces confinés comprenant un bras robotique (11), un organe terminal effecteur (13) pourvu d'un moyen d'inspection et un système de commande ; le bras robotique (11) comprenant une base fixe (21) et un premier module (23) adjacent à la base fixe (21) formé de plusieurs premiers maillons (31) raccordés par des premières articulations (33) ; lesdits premiers maillons (31) étant entraînés par des moyens de tendons (35) attachés à ceux-ci par une extrémité et à des premiers dispositifs d'actionnement (37) situés au niveau de ladite base fixe (21) par l'autre extrémité ;
dans lequel :
- le premier module (23) est configuré de sorte que l'angle d'ouverture maximal α dans les premières articulations (33) soit de ± 30° ;
et dans lequel le bras robotique comprend également un second module (25) agencé près du premier module (23) qui comprend plusieurs deuxièmes maillons (41), raccordés par des secondes articulations (43), qui sont entraînés par des deuxièmes dispositifs d'actionnement (45) situés dans les deuxièmes maillons (41) ; le second module (25) étant configuré de sorte que l'angle d'ouverture maximal β dans les secondes articulations (43) soit de ± 55°.

2. Robot selon la revendication 1, dans lequel l'organe terminal effecteur (13) est agencé près du second module (25) de sorte que le moyen d'inspection puisse réaliser des mouvements de tangage et de roulis par rapport au dernier deuxième maillon (41).

3. Robot selon la revendication 2, dans lequel l'organe terminal effecteur (13) est formé d'un troisième maillon (71), attaché au dernier deuxième maillon (41) par une seconde articulation (43), et d'un maillon final (73), portant le moyen d'inspection, raccordé au troisième maillon (71) par un axe de tangage (83).

4. Robot selon la revendication 3, dans lequel le troisième maillon (71) comprend un troisième dispositif d'actionnement (77) coopérant avec une couronne denté (81) disposé adjacent au maillon final (73) pour réaliser les mouvements de roulis de l'organe terminal effecteur (13).

5. Robot selon la revendication 3, dans lequel le maillon final (73) comprend un quatrième dispositif d'actionnement (79) coopérant avec l'axe de tangage (83) pour réaliser les mouvements de tangage du maillon final (73).

6. Robot selon l'une quelconque des revendications 1 à 5, dans lequel le moyen d'inspection agencé dans l'organe effecteur terminal (13) comprend au moins une caméra de vision et une caméra IRT.

7. Robot selon l'une quelconque des revendications 1 à 6, dans lequel chaque premier maillon (31) est entraîné par trois tendons (35) et lesdites premières articulations (33) sont des joints de Cardan.

8. Robot selon l'une quelconque des revendications 1 à 7, dans lequel les secondes articulations (43) sont des joints de Cardan dont l'arbre transversal (51) comprend deux roues dentées (53, 53') associées à leurs arbres (61, 61') et les deuxièmes dispositifs d'actionnement (45) comprennent un ensemble d'engrenage moteur-réducteur avec un pignon final (57) coopérant avec lesdites roues dentées (53, 53').

9. Robot selon la revendication 8, dans lequel lesdits deuxièmes dispositifs d'actionnement (45) comprennent également un frein.
